Europäisches Patentamt

**European Patent Office**

**Office européen des brevets**

(19)

(11) Publication number: **0 122 802**
A2

(12)

# EUROPEAN PATENT APPLICATION

(21) Application number: **84302571.9**

(22) Date of filing: **16.04.84**

(51) Int. Cl.³: **F 02 M 55/02**

(30) Priority: **15.04.83 GB 8310210**

(43) Date of publication of application:
**24.10.84 Bulletin 84/43**

(84) Designated Contracting States:
**BE DE FR GB IT NL SE**

(71) Applicant: **FORD MOTOR COMPANY LIMITED**
**Eagle Way**
**Brentwood Essex CM13 3BW(GB)**

(84) Designated Contracting States:
**BE GB IT NL SE**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(72) Inventor: **Taylor Rupert Maurice**
**17, Adelaide Square**
**Windsor Berkshire SL4 2AQ(GB)**

(74) Representative: **Messulam, Alec Moses et al,**
**A. Messulam & Co. 24 Broadway**
**Leigh on Sea Essex SS9 1BN(GB)**

(54) Reducing combustion noise in a fuel-injected engine.

(57) The pressure pulses travelling along fuel lines to fuel injectors produce noise when the engine is running. In order to reduce this noise attempts are made to modify the shape of the pulse pressure front before it reaches the cylinder. In particular, it is desirable to reduce the rate of rise of the pressure front which in turn reduces the fuel mass flow rate into the cylinder. This has an effect on the combustion propagation within the cylinder combustion chamber and thus reduces noise.

To achieve this desirable end, a filter 14 is positioned in the fuel line between the injector pump 10 and the injector 18. This filter has an internal chamber in which the pressure pulse is reflected and then interferes with itself to construct a new pulse of a desirable form.

FIG.1.

# REDUCING COMBUSTION NOISE IN A FUEL-INJECTED ENGINE

This invention relates to the reduction of combustion noise from a fuel-injected engine, particularly a diesel engine. The invention provides a method and an apparatus for reducing such noise.

In a diesel engine, a fuel-injection pump produces a pressure wave pulse in the high pressure fuel pipe which travels down the pipe to the injector where it causes a volume of fuel to be injected into the cylinder. The instantaneous mass flow of fuel into the cylinder depends on the pressure in the injector sac and, as it burns, gives rise to pressure fluctuations in the cylinder which are related to those in the high pressure fuel pipes. In this way, pressure fluctuations in the high pressure pipes are transformed into and heard as combustion noise from the engine.

The present invention seeks to provide a method and apparatus for reducing the noise in this frequency range.

According to the present invention, there is provided a method of reducing combustion noise in a fuel injected engine, characterised in that a passive wave filter is inserted in each fuel line between the injection pump and the injector, the passive filter being operative to divide the pressures waves into different components and to recombine the components after they have travelled different distances, the interference between the wave components serving to suppress waves having a frequency within a range at which combustion noise, in the absence of the wave filter, would be pronounced.

In accordance with as second aspect of the invention, an apparatus for reducing combustion noise from a fuel-injected engine comprises a passive filter for inclusion in a fuel line between the injection pump and an injector, the filter being formed of a chamber having an inlet, an outlet and an internal wall against which pressure waves can be reflected, the pressure waves at the outlet being the result of interference between pressure waves reflected by the internal wall and incoming pressure waves received directly from the inlet without reflection, the interference being operative to suppress waves within a predetermined frequency range responsible for combustion noise.

The frequency range of the combustion noise which is the most significant part of the sound spectrum is around 2000 Hz. This component of noise derives from the change of slope of the cylinder pressure at the very start of combustion.

Certain effects of wave propagation down the high pressure fuel lines of a diesel engine have been noted in the past and previous proposals have been made to include filters in the fuel lines in order to avoid other problems caused by pressure waves.

For example, GB-PS 2054038 desribes an arrangement with moving parts to render the injection quantity independent of the pressure and volume curve of the injection pump. Also, GB-PS 1573981 describes another arrangement with moving parts which acts as an accumulator to prevent lift off of the valve needle which can be caused by pressure build up.

However, the prior art does not recognise the noise problem caused by waves within a certain frequency range an does not provide a passive filter capable of reducing combustion noise.

The invention will now be further described, by way of example, with reference to the accompanying drawings, in which:

Figure 1 is a schematic diagram showing the progress of a pressure wave pulse through a fuel injection system; and

Figure 2 shows a cross section through a filter according to the invention.

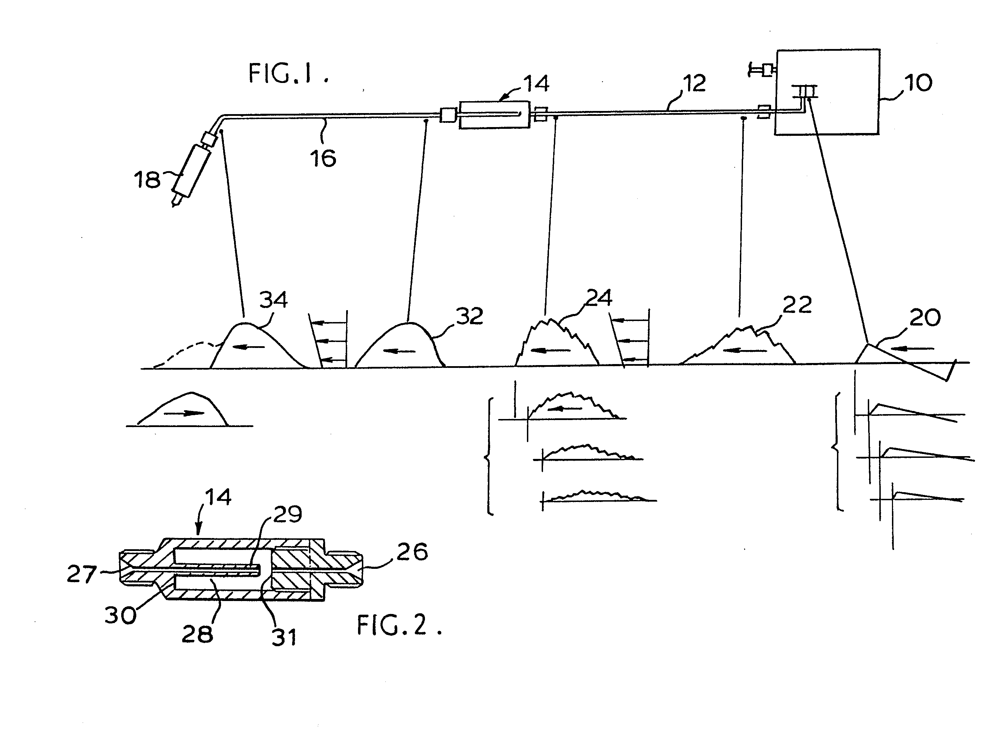

Figure 1 shows a fuel injection pump 10, a first fuel line portion 12, a filter 14, a second fuel line portion 16 and an injector 18. In practice a number of injectors 18 are connected to one fuel pump, through appropriate fuel lines and filters.

Below this hardware, the waveforms produced at the various stages of the fuel pipe are indicated. The plungers in the fuel injection pump produce a sharply defined pressure wave 20. This pressure wave is modified by discontinuities in the pump and emerges into the high pressure fuel line portion 12 as a pressure pulse 22 with a high frequency oscillation superimposed. This oscillation, at about 12,000 Hz, does not make a significant contribution to the combustion noise. Instead it is the initial slope of this pressure pulse which is the important parameter, and this slope is modified as the wave propagates down the fuel pipe.

In the classical analysis of pressure waves in a fluid, it is assumed that the fuel is compressible. However, due to the high pressure levels obtaining in a system of this nature, it is not possible to make this assumption. The speed at which pressure waves propagate (the speed of sound) is greater at high pressures than at low pressures. This means that the high pressure part of the pulse moves faster than the low pressure part and the leading edge of the pulse steepens up into a shock wave, as can be seen at 24. It is this shock wave that the filter 14 seeks to modify.

The filter 14 itself is shown in more detail in Fig. 2. The filter has an inlet 26 and an outlet 27. Both inlet and outlet are provided with nipples onto which the fuel lines 12 and 16 can be fitted. The filter has a chamber ·28. The inlet through passage 26 opens into one end of this chamber. The outlet 27 leaves the chamber through a pipe 29 which extends across the chamber 28 nearly to the position of the inlet 26. The dimensions of the chamber 28 and the position of the end of the tube 29 relative to the inlet 26 are in practice determined ·in accordance with the characteristics of the pressure waves to be filtered. The incoming pressure wave 24 spreads out in the chamber 28 and is reflected between the end faces 30 and 31. The reflected waves will then interfere with unreflected waves entering through the inlet 26, to produce a new transmitted pulse 32. This pressure pulse is smooth and has a reduced rate of rise of pressure at the leading edge.

The new pulse 32 travels to the injector and steepens as it is propagated to a shape 34, but still has a lower rate of rise than normal. As a consequence, the rate of rise of pressure in the engine cylinder is reduced, because the initial fuel mass flow rate into the cylinder is reduced. This results in less noise.

- 5 - 0122802

## CLAIMS

1. A method of reducing combustion noise in a fuel injected engine, characterised in that a passive wave filter is inserted in each fuel line between the injection pump and the injector, the passive filter being operative to divide the pressures waves into different components and to recombine the components after they have travelled different distances, the interference between the wave components serving to suppress waves having a frequency within a range at which combustion noise, in the absence of the wave filter, would be pronounced.

2. An apparatus for reducing combustion noise from a fuel-injected engine, characterised by a passive filter (14) for inclusion in a fuel line between the injection pump (10) and an injector (12), the filter (14) being formed of a chamber (28) having an inlet (26), an outlet (27) and an internal wall (30) against which pressure waves can be reflected, the pressure waves at the outlet (27) being the result of interference between pressure waves reflected by the internal wall and incoming pressure waves received directly from the inlet without reflection, the interference being operative to suppress waves within a predetermined frequency range responsible for combustion noise.

FIG.1.

FIG.2.